# EUROPÄISCHE PATENTANMELDUNG

(11) **EP 2 942 592 A1**
(43) Veröffentlichungstag der Anmeldung: **11.11.2015**
(21) Anmeldenummer: 15160236.4
(22) Anmeldetag: 23.03.2015
(51) Int. Cl.: F28D 20/02

(54) **LATENTWÄRMESPEICHER**

(30) Priorität: 30.04.2014 DE 102014208254
(71) Anmelder: ROBERT BOSCH GMBH, 70442 Stuttgart (DE)
(72) Erfinder: Brandes, Henrick, 71636 Ludwigsburg (DE); Emmerling, Oliver, 71254 Ditzingen (DE); Tschismar, Oliver, 72555 Metzingen (DE); Kurras, Mathias, 70839 Gerlingen (DE)

(57) **Zusammenfassung**

Die Erfindung betrifft einen Latentwärmespeicher (1) zur temporären Bevorratung von Heizenergie, umfassend ein Gehäuse (2), welches ein PCM (4) als Energiespeichermedium beinhaltet, das durch Wechsel vom im Normalzustand flüssigen zum festen Aggregatzustand thermische Energie abgibt, mindestens eine zumindest teilweise im oder am Gehäuse (2) angeordnete und mit dem PCM (4) in Wärmeaustausch stehende Wärmeübertragungsvorrichtung (7) zur Weiterleitung der thermischen Energie, mindestens eine am Gehäuse (2) angeordnete Keimbereitstellungseinrichtung (3) zur Erzeugung eines Kristallisationskeims, dadurch gekennzeichnet, dass die mindestens eine Keimbereitstellungseinrichtung (3) in einem der Wärmeübertragungsvorrichtung (7) abgewandten Initialbereich (16) des Gehäuses (2) vorgesehen ist, um einen Phasenwechsel des PCM (4) von der flüssigen in die feste Phase in Form einer Kristallisation auszulösen, wodurch sich in einem vom Initialbereich (16) verschiedenen, an die Wärmeübertragungsvorrichtung (7) grenzenden Kompensationsbereich (17) ein Kompensationsvolumen (8) bildet, welches das PCM (4) während eines Phasenwechsels von der festen in die flüssige Phase durch Schmelzen einnimmt.

## Beschreibung

Die Erfindung betrifft einen Latentwärmespeicher zur temporären Bevorratung von Heizenergie, umfassend ein Gehäuse, welches ein PCM als Energiespeichermedium beinhaltet, das durch Wechsel vom im Normalzustand flüssigen zum festen Aggregatzustand thermische Energie abgibt, mindestens eine zumindest teilweise im oder am Gehäuse angeordnete und mit dem PCM in Wärmeaustausch stehende Wärmeübertragungsvorrichtung zur Weiterleitung der thermischen Energie sowie mindestens eine am Gehäuse angeordnete Keimbereitstellungseinrichtung zur Erzeugung eines Kristallisationskeims.

Als Normalzustand wird hier der Zustand des PCMs bezeichnet, in dem es unterkühlt ist, also eine Temperatur unterhalb seiner Schmelztemperatur besitzt, aber aufgrund der Abwesenheit eines Kristallisationskeims noch flüssig ist.

Das Einsatzgebiet der Erfindung umfasst eine Vielzahl von Anwendungen, bei denen thermische Energie über längere Zeiten verlustarm gespeichert und bei Bedarf extrahierbar sein soll. Ein Einsatzbeispiel ist die Erwärmung von Motoröl einer Brennkraftmaschine, um in der Kaltstartphase die Viskosität dieses Motoröls zu verringern. Weitere Anwendungsgebiete umfassen den Einsatz in der Gastronomie in Warmhalteplatten oder im Bauwesen beispielsweise in Solarthermieanlagen.

In einem Latentwärmespeicher wird ein PCM eingesetzt, welches eine hohe Schmelzwärme besitzt. Aufgrund dieser Eigenschaft kann es beim Übergang von flüssiger zu fester Phase große Mengen thermischer Energie abgeben beziehungsweise beim umgekehrten Übergang aufnehmen, während die Temperatur des PCM weitgehend konstant bleibt. Dadurch lässt sich diese Energie über längere Zeiträume speichern, ohne das sie beispielsweise durch Wärmeleitung an das Gehäuse oder durch Wärmestrahlung an die Umgebung verloren geht.

Zu Heizzwecken wird der Übergang von der flüssigen in die feste Phase des PCM ausgenutzt. Bei unterkühlbaren Schmelzen befindet sich das flüssige PCM in einem metastabilen Zustand mit einer Temperatur unterhalb seiner Schmelztemperatur. Stoffabhängig kann diese Temperatur unterschiedlich weit unterhalb der Schmelztemperatur liegen. Wenn mindestens ein Kristallisationskeim hinreichender Größe in der unterkühlten Schmelze vorliegt, geht von diesem Keim eine idealtypisch kugelförmig wachsende Kristallisation aus, bei der die zuvor aufgenommene thermische Energie zum einen in die Eigenerwärmung der unterkühlten Schmelze auf Schmelztemperaturniveau sowie gegebenenfalls darüber hinaus zur Erhöhung der Temperatur mindestens eines in Wärmeübertragung stehenden Fluides oder Festkörpers genutzt werden kann. Durch Wärmeübertragung mit einer Wärmeübertragungsvorrichtung, beispielsweise durch Wärmeabstrahlung nach außen oder durch Wärmeleitung an eine an das PCM angrenzende oder insbesondere darin eingebettete Fluidleitung, wird die thermische Energie extrahiert.

Das Schmelzen, also der Übergang von der festen in die flüssige Phase eines PCM geht in der Regel, eine Ausnahme bildet beispielsweise Wasser, mit einer Verringerung seiner Dichte, also mit einer Volumenexpansion einher. Daher muss in einem formstabilen Gehäuse eines Latentwärmespeichers mindestens ein Kompensationsvolumen vorgesehen sein, in welches sich das schmelzende Phasenwechselmaterial ausdehnen kann, da die sonst auftretenden Drücke beziehungsweise Kräfte das Gehäuse oder eine gegebenenfalls darin gelegene Wärmeübertragungsvorrichtung beschädigen können.

Die Existenz eines Kompensationsvolumens reicht allein noch nicht aus, um zu gewährleisten, dass solche Beschädigungen nicht auftreten. Es ist beispielsweise denkbar, dass ein eingeschlossener Bereich des PCM, welcher zu allen Seiten von festem PCM umgeben ist und an mindestens einer Stelle an das Gehäuse oder an eine Wärmeübertragungsvorrichtung grenzt, schmilzt und somit expandiert. Mangels eines angrenzenden Kompensationsvolumens kann das eingeschlossene PCM dann das Gehäuse oder die Wärmeübertragungsvorrichtung mit Schaden verursachendem Druck beaufschlagen.

### Stand der Technik

Aus der DE 10 2011 085 722 A1 ist ein Latentwärmespeicher bekannt, bei dem ein Kompensationsvolumen im oberen, also der Gravitationsrichtung entgegengesetzten Bereich des zylinderförmigen Gehäuses vorgesehen ist, so dass schmelzendes PCM, das an diesen oberen Bereich angrenzt, dort hinein expandieren kann. Um sicherzustellen, dass keine von festem PCM eingeschlossenen Gebiete entstehen, die wie oben beschrieben schädlich sein können, ist die Wärmeübertragungsvorrichtung so konfiguriert, dass das PCM zuerst oben und inkrementell weiter unten schmilzt. Insbesondere wird die Verwendung mindestens eines Wärmeübertragungsrohres als Wärmeübertragungsvorrichtung vorgeschlagen, welches konzentrisch im Gehäuse angeordnet ist und von einem nach unten gerichteten, warmen Wärmeübertragungsfluid durchströmt wird, welches jeden oberen Teil des PCM aufgrund seiner Flussrichtung früher und aufgrund seiner Abkühlung stärker erwärmt als jeden darunter liegenden Teil. Dadurch bildet sich längs des Wärmeübertragungsrohres ein sich nach oben hin erweiternder Bereich mit flüssigem, geschmolzenem PCM, mit der Oberfläche an das Kompensationsvolumen grenzt. Eingeschlossene Gebiete schmelzenden PCMs sollten durch die beschriebene Anordnung idealerweise nicht entstehen.

Nachteilhaft an dieser Lösung ist, dass keine Maßnahmen zur gezielten Formung und Anordnung des Kompensationsvolumens vorgesehen sind. Das Kompensationsvolumen entsteht hier durch die Verdichtung des PCM während der Kristallisierung, die beispielsweise durch Durchströmen der Wärmeübertragungsvorrichtung mit einem Wärmeübertragungsfluid mit einer Temperatur unterhalb der Schmelztemperatur des PCM ausgelöst wird.

Es ist in Folge beispielsweise denkbar, dass während der Kristallisierung Einschlüsse von Kompensationsvolumina im Innern des kristallinen PCM, insbesondere also außerhalb des vorgesehenen oberen Bereichs entstehen. Diese Volumina werden folglich im oberen Bereich fehlen, welcher dann möglicherweise nicht über die räumliche notwendige Kapazität zur Aufnahme von dem expandierenden PCM verfügt.

Ferner ist es denkbar, dass der oben beschriebene Bereich geschmolzenen PCMs derart dünn und hoch ausgebildet ist, dass unten schmelzendes Material nicht hinreichend schnell nach oben zum Kompensationsvolumen expandieren kann, um schädliche Druckbeaufschlagung zu vermeiden. Vorteilhaft wäre eine Vorrichtung zur gezielten Beeinflussung der Form des Kompensationsvolumens, wodurch das erstarrte PCM beispielsweise im oberen Bereich einen zur Wärmeübertragungsvorrichtung nach unten sich verkleinernden Abstand besitzt, der somit selbst einen Teil des Kompensationsvolumens bildet und in welchen schmelzendes PCM schnell expandieren und abströmen kann. Das kristalline PCM sollte also in diesem Beispiel mit zylinderförmigem Gehäuse möglichst eine trichterförmige Struktur beziehungsweise im Bereich um die Wärmeübertragungsvorrichtung ein trichterförmiges Gefälle aufweisen, damit schmelzendem PCM aus einem unteren Bereich ein möglichst hohes Volumen zur Expansion zu Verfügung steht.

Es ist daher die Aufgabe der vorliegenden Erfindung, einen Latentwärmespeicher zu schaffen, bei dem die Kristallisierung des zuvor flüssigen PCMs auf eine Art und Weise geschieht, bei der sichergestellt ist, dass das kristallisierte PCM frei von Einschlüssen von Hohlräumen entsteht und vorzugsweise eine schnelle Abführung von durch Phasenübergang expandierendem PCM an ein angrenzendes Kompensationsvolumen erlaubt.

### Offenbarung der Erfindung

Die Aufgabe wird ausgehend von einer Vorrichtung gemäß dem Obergriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die mindestens eine Keimbereitstellungseinrichtung in einem der Wärmeübertragungsvorrichtung abgewandten Initialbereich des Gehäuses vorgesehen ist, um einen Phasenwechsel des PCM von der flüssigen in die feste Phase in Form einer Kristallisation auszulösen, wodurch sich in einem vom Initialbereich verschiedenen, an die Wärmeübertragungsvorrichtung grenzenden Kompensationsbereich ein Kompensationsvolumen bildet, welches das PCM während eines Phasenwechsels von der festen in die flüssige Phase durch Schmelzen einnimmt.

Dadurch, dass der Initialbereich abseits der Wärmeübertragungsvorrichtung, beispielsweise eines auf der Symmetrieachse eines kreiszylinderförmigen Latentwärmespeichers angebrachten Rohres, angeordnet ist, ist gewährleistet, dass die Kristallisationsfront, die von dem Initialbereich ausgeht, sich räumlich in Richtung der Wärmeübertragungsvorrichtung ausbreitet und dass in Folge das Kompensationsvolumen, in das schmelzendes PCM expandieren soll, direkt an die es erzeugende Wärmeübertragungsvorrichtung grenzt. Die Keimbereitstellungseinrichtung kann beispielsweise einen ausreichend großen Kristallisationskeim in dem flüssigen PCM erzeugen, oder einen solchen schon existierenden Keim in Kontakt mit dem flüssigen PCM bringen, beispielsweise durch Freisetzen des Keims im PCM. Hierzu ist die mindestens eine Keimbereitstellungseinrichtung insbesondere separat von der Wärmeübertragungsvorrichtung so an oder im PCM angebracht, dass die von dem erzeugten Keim ausgehende Kristallisation beziehungsweise die Kristallisationsfront einem vorgesehenen Pfad folgt, so dass das endgültig kristallisierte PCM eine vorgesehene Form besitzt. Das Kompensationsvolumen ist dann die geometrische Differenz aus dem Innenraum des Gehäuses und dem kristallisierten PCM. Vorteilhaft hierbei ist, dass sich Einschlüsse vermeiden lassen und die Form des Kompensationsvolumens sich so zielgerichtet beeinflussen lässt.

Vorzugsweise befindet sich dieser Initialbereich im unteren Teil, also in Richtung der Gravitation, des Gehäuses, so dass das flüssige PCM durch die Gravitation in die Richtung des kristallinen PCM gedrückt wird. Dadurch lassen sich insbesondere Einschlüsse im kristallinen PCM verhindern. Ferner lässt sich so die Form des Kompensationsvolumens beeinflussen. Befindet sich die einzige Keimbereitstellungseinrichtung beispielsweise in einem linken unteren Bereich des Gehäuses, so wird das endgültig kristallisierte PCM keine Einschlüsse von Kompensationsvolumina und zusätzlich ein Gefälle von links nach rechts aufweisen, da die idealtypisch kugelförmig ausbreitende Kristallisierung an der Oberfläche eine links-rechts Richtung besitzen wird, während sich der Flüssigkeitspegel aufgrund der steigenden Dichte des PCM senkt. Durch geschickte Anordnung der Keimbereitstellungseinrichtungen lässt sich so beispielsweise insbesondere ein von oben nach unten verkleinernder Abstand des kristallinen PCM zu Wärmeübertragungsvorrichtung erzeugen.

In einer bevorzugten Ausführungsform der Erfindung ist mindestens ein Isolationselement in dem Gehäuse vorgesehen, um die Ausbreitung der Kristallisierung zu führen. Diese Führung kann durch das Isolationselement alleine oder beispielsweise durch Zusammenarbeit mit der Innenwand des Gehäuses oder der Außenwand der Wärmeübertragungsvorrichtung geschehen. Somit kann das mindestens eine Keimbereitstellungseinrichtung prinzipiell beliebig angeordnet sein, da das Isolationselement den Kristallisationspfad führt, und es somit den Initialbereich beziehungsweise die Quelle für die Kristallisation frei positionieren kann.

Bevorzugt kann das mindestens eine Isolationselement aus einem elastischen Material bestehen und / oder thermisch isolierend wirken. Diese thermische Isolation kann beispielsweise durch ein thermisch isolierendes Material oder durch eine thermisch isolierende Bauform, beispielsweise durch einen im Isolierelement integrierten Zwischenraum, erreicht werden. Vorteilhaft an der Realisierung mit elastischem Material ist, dass geschmolzenes PCM, welches durch kristallines PCM und das Isolationselement eingeschlossen ist, zum Druckausgleich expandieren und dabei das Isolationselements verformen kann, statt es durch Druckbeaufschlagung potentiell zu beschädigen. Vorteilhaft an der Realisierung mit thermisch isolierendem Material ist, dass das Schmelzen von durch das Isolationselement eingeschlossenen Gebieten des PCM gänzlich verhindert wird.

Desweiteren schließt das Isolationselement vorzugsweise ein möglichst geringes Volumen ein, da zur Aufrechterhaltung beziehungsweise Führung der Kristallisation idealerweise bereits eine Breite weniger Moleküle ausreicht, während größere Mengen im Falle einer Schmelze lediglich eine höhere, potentiell schädliche Druckbelastung zur Folge haben.

In einer bevorzugten Ausgestaltung der Erfindung besteht die mindestens eine Keimbereitstellungseinrichtung aus mindestens einem an den Initialbereich bzw. das PCM angrenzenden, insbesondere elektrisch auslösbaren, Aktuator, beispielsweise aus einem Peltier-Element oder einem Magnetaktor. Somit lässt sich die Kristallisation zeitlich und räumlich quasi punktuell und elektronisch gesteuert oder geregelt auslösen.

Die Erfindung wird dadurch weiter verbessert, dass das Gehäuse luftdicht und mechanisch starr ist, sowie überwiegend oder insbesondere vollständig mit PCM im flüssigen Zustand gefüllt ist. Dadurch wird zum einem die notwendige Größe des Latentwärmespeichers minimiert, bei gleichzeitiger Optimierung der Wärmeübertragungsfläche. Zum anderen entsteht nun bei der Kristallisierung des PCM anders als im Stand der Technik eine Kavität mit Unterdruck und einer verringerten Dichte, insbesondere gegebenenfalls eine evakuierte Kavität, die neben der Funktion als Kompensationsvolumen gleichzeitig eine thermische Isolierung, ähnlich der Isolation einer Thermoskanne, gegenüber den angrenzenden Wänden des Gehäuses darstellt, da hier eine deutlich reduzierte Wärmeleitung und / oder Konvektion stattfinden kann. Insbesondere besitzt das Gehäuse, damit ein solcher Unterdruck entstehen kann, eine ausreichende Formstabilität, um trotz des Überdrucks der Umgebung seine Form, insbesondere sein Innenvolumen, ausreichend zu erhalten. Typischerweise nimmt das Kompensationsvolumen dann mehr als 10 % des Gehäusevolumens ein.

Weiter lässt sich die Erfindung verbessern, indem mindestens zwei Keimbereitstellungseinrichtungen vorgesehen sind, wobei jede der mindestens zwei Keimbereitstellungseinrichtungen mit einem Zeitgeber zusammenarbeitet, um den zeitlichen Abstand der Aktivierung der Keimbereitstellungseinrichtungen relativ zueinander festzulegen. Somit lässt sich die Form des endgültig kristallisierten PCMs und somit des Kompensationsvolumens nicht nur über die Position der Keimbereitstellungseinrichtungen sondern zusätzlich auch über deren zeitlichen Versatz zueinander beeinflussen.

Eine verbessernde Maßnahme der Erfindung sieht vor, dass ein Trennelement einerseits an das PCM und andererseits an das Kompensationsvolumen grenzt. Beispielsweise kann es sich um eine elastische Membran handeln. Besitzt die Membran eine ausreichende Vorspannung, so kann der Latentwärmespeicher prinzipiell beliebig orientiert sein, da die Membran das PCM mit Druck beaufschlagt und die Entstehung von Kavitationen innerhalb des PCM sowie das Eindringen von angrenzendem Gas in das Innere des PCM verhindert. Insbesondere kann der Latentwärmespeicher so angeordnet sein, dass sich das Initialgebiet in einem der Gravitation entgegengesetzten Bereich befindet. Zusätzlich lässt sich die Form des kristallinen PCM, beispielsweise eine trichterförmige Form, durch die Form und die Einspannung der Membran bestimmen.

Vorzugsweise ist an das Gehäuse ein betätigbares Trennorgan, beispielsweise ein Ventil angebracht, wodurch flüssiges PCM eingefüllt oder abgelassen werden kann, oder durch welches ein Unterdruck in dem Gehäuse durch Absaugen von Gas aus dem Kompensationsvolumen oder Abpumpen von flüssigem PCM erzeugt werden kann. Hierdurch kann beispielsweise der thermisch isolierende Unterdruck, der bei Verdichtung des PCM im Kompensationsvolumen auftritt, erhöht werden.

Die Erfindung wird dadurch weiter verbessert, dass als Wärmeübertragungsvorrichtung Wärmeübertragungsplatten eingesetzt werden, die von Wärmeübertragungsfluid durchströmt werden. Diese Platten können zur Erhöhung der Wärmeübertragungsfläche zusätzlich oberflächenstrukturiert sein und parallel zueinander angeordnet sein um eine Plattenstruktur zu bilden.

Weitere, die Erfindung verbessernden Maßnahmen werden nachstehend gemeinsam mit der Beschreibung von bevorzugten Ausführungsbeispielen der Erfindung anhand der Figuren näher dargestellt.
Figur 1a zeigt ein Schema eines im Normalzustand vollständig mit flüssigem PCM gefüllten Latentwärmespeichers mit zwei unten angebrachten Keimbereitstellungseinrichtungen und teilweise kristallisiertem PCM.
Figur 1b zeigt ein Schema eines Latentwärmespeichers mit zwei unten angebrachten Keimbereitstellungseinrichtungen und vollständig kristallisierten PCM.
Figuren 2a, 2b zeigen einen Latentwärmespeicher mit Isolationselement mit teilweise beziehungsweise vollständig kristallisiertem PCM.
Figuren 3a, 3b schematisieren die Verwendung eines thermisch isolierenden beziehungsweise eines elastischen Isolationselements.
Figuren 4a, 4b, 4c, 4d zeigen vier zeitlich aufeinander folgende Zustände eines Latentwärmespeichers, bei dem die Positionierung der Keimbereitstellungseinrichtungen eine trichterförmige Struktur des kristallinen PCMs verursacht.
Figuren 5a, 5b zeigen zwei zeitlich aufeinander folgende Zustände eines Latentwärmespeichers, bei dem die zeitliche Abfolge der Aktivierung der Keimbereitstellungseinrichtungen eine trichterförmige Struktur des kristallinen PCMs verursacht.
Figur 6 zeigt das Schema eines Latentwärmespeichers mit einer elastischen Membran, wobei das Kompensationsvolumen unterhalb des PCM angeordnet ist.

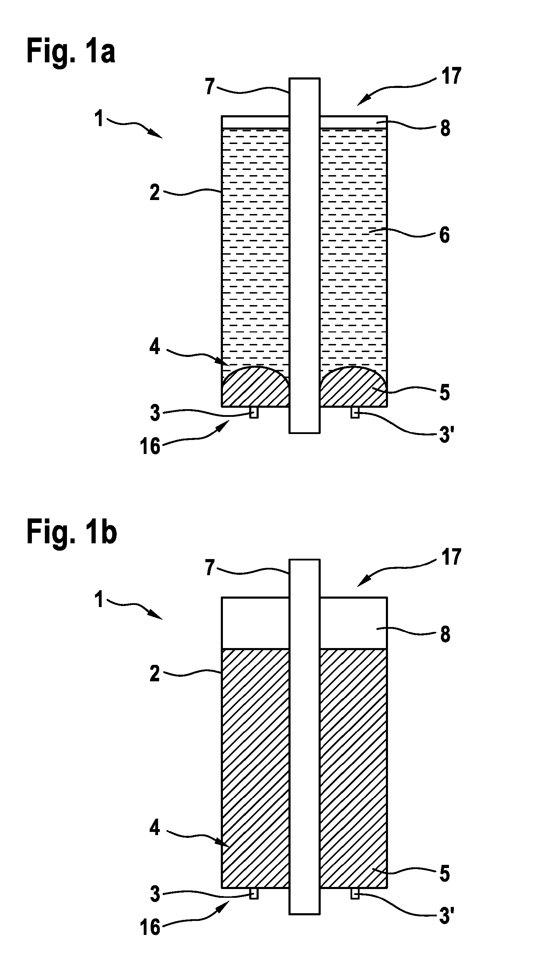

Gemäß Figur 1a umfasst der Latentwärmespeicher 1 ein zylinderförmiges Gehäuse 2, an dessen Unterseite zwei Keimbereitstellungseinrichtungen 3, 3' in Form von Peltier-Elementen angebracht sind, die somit den Initialbereich 16 definieren. In dem Gehäuse 2 befindet sich ein PCM 4 in Form von Natriumacetat-Trihydrat, unterteilbar in flüssiges PCM 6 und kristallines PCM 5. Die Kristallisation geht dabei im Wesentlichen kugelförmig von den Keimbereitstellungseinrichtungen 3, 3' aus, bis jene an eine Wand des Gehäuses 2 oder an die mittig angeordnete Wärmeübertragungsvorrichtung 7 in Form eines Wärmeübertragungsrohrs stößt. Da das PCM 4 durch Kristallisation an Dichte gewinnt, sinkt der Flüssigkeitspegel während der Kristallisation ab. Da der Latentwärmespeicher zu Beginn - nicht dargestellt - vollständig mit flüssigem PCM gefüllt, war, bildet sich ein evakuiertes Kompensationsvolumen 8 im dadurch definierten Kompensationsbereich 17.

In Figur 1b ist der Endzustand dieses Prozesses zu sehen. Da die Keimbereitstellungseinrichtungen 3, 3' auf der Unterseite einen zur Breite des Gehäuses 2 großen Abstand von der Oberseite besitzen, hat sich eine im Wesentlichen ebene Oberseite des kristallinen PCMs 5 gebildet.

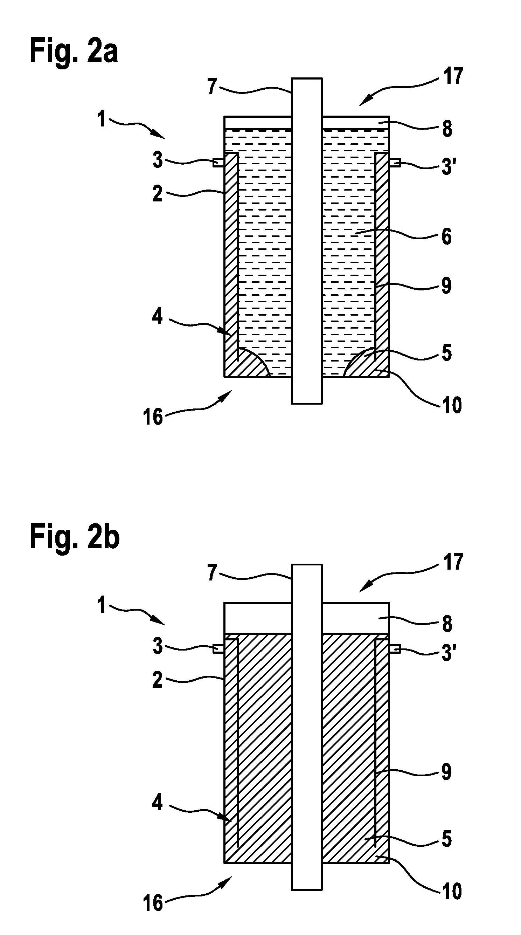

In Figur 2a ist ein äquivalenter Aufbau mit einem Isolationselement 9 schematisiert. Die Keimbereitstellungseinrichtungen 3, 3' sind hier im oberen Teil seitlich angebracht. Dadurch, dass die Isolationselemente einen Kontakt des PCM 4 zwischen Isolationselement 9 und Gehäusewand mit dem PCM 4 im Innern des Gehäuses 2 nicht zulassen, wird die Kristallisation bis zur Öffnung 10 geführt, so dass sich der Initialbereich 16 dorthin verlagert. Im Anschluss verhält die folgende Kristallisation sich dann ähnlich wie in dem zuvor dargestellten Ausführungsbeispiel.

Figur 2b zeigt den Endzustand dieses Prozesses. Aufgrund der durch das Isolationselement 9 effektiv ähnlichen Geometrie zu dem vorigen Ausführungsbeispiel ergibt sich ein dazu ähnlicher Zustand, trotz der gänzlich anderen Anordnung der Keimbereitstellungseinrichtungen 3, 3'.

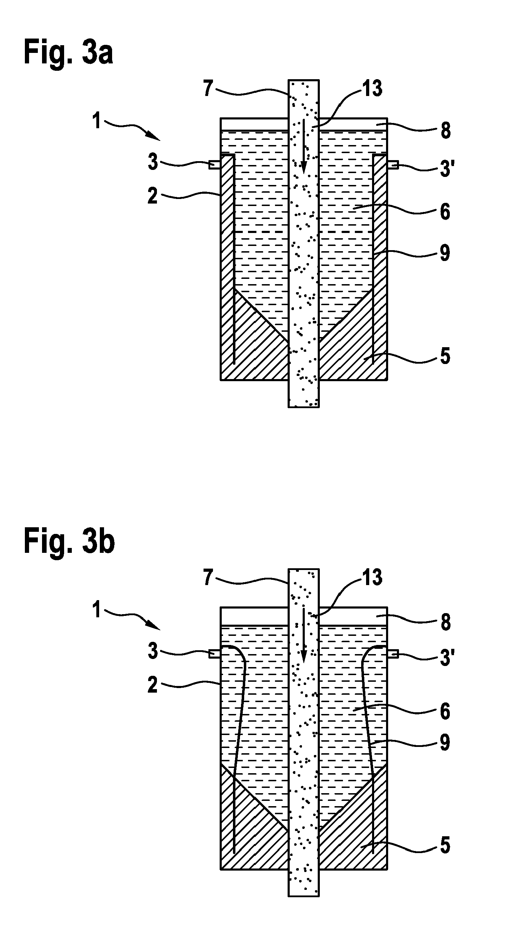

In Figur 3a ist das Schmelzen des kristallinen PCMs 5 mit einem thermisch isolierenden Isolationselement 9 schematisiert. Durch von oben nach unten einströmendes, warmes Wärmeübertragungsfluid 13 in Form von Motoröl in der Wärmeübertragungsvorrichtung 7 schmilzt davon ausgehend ein kegelförmiger Bereich, der in das Kompensationsvolumen 8 expandieren kann. Kristallines PCM 5, das nicht dorthin expandieren kann, da es durch das Isolationselement 9 eingeschlossen ist, wird durch die gleichzeitige thermische Isolierung daran gehindert, zu schmelzen.

In Figur 3b ist schematisiert, wie ein elastisches Isolationselement 9 dazu führt, dass dadurch eingeschlossenes PCM 4 schmelzen kann, ohne das Gehäuse 2 oder das Isolationselement 9 zu beschädigen, da die mit dem Phasenwechsel einhergehende Expansion durch Dehnung des Isolationselements 9 kompensiert wird, so dass kein erhöhter Druck auf die beteiligten Wände entsteht.

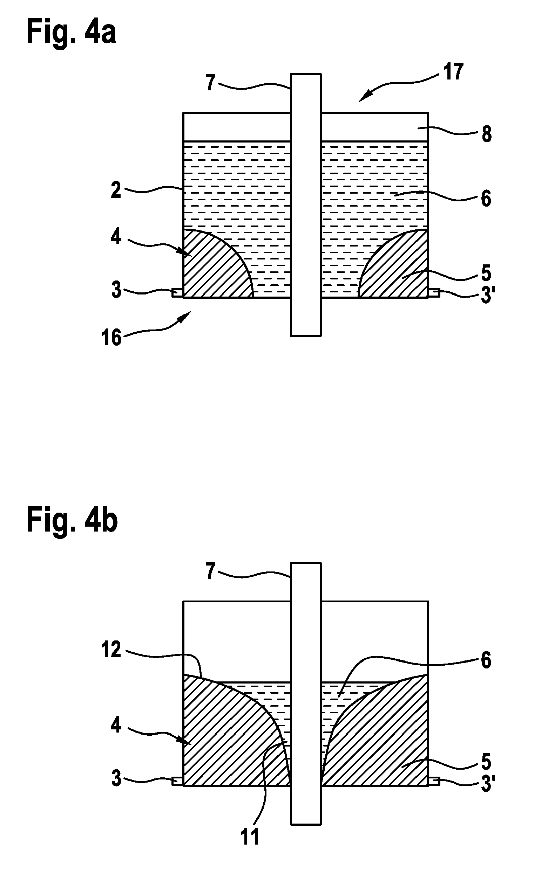

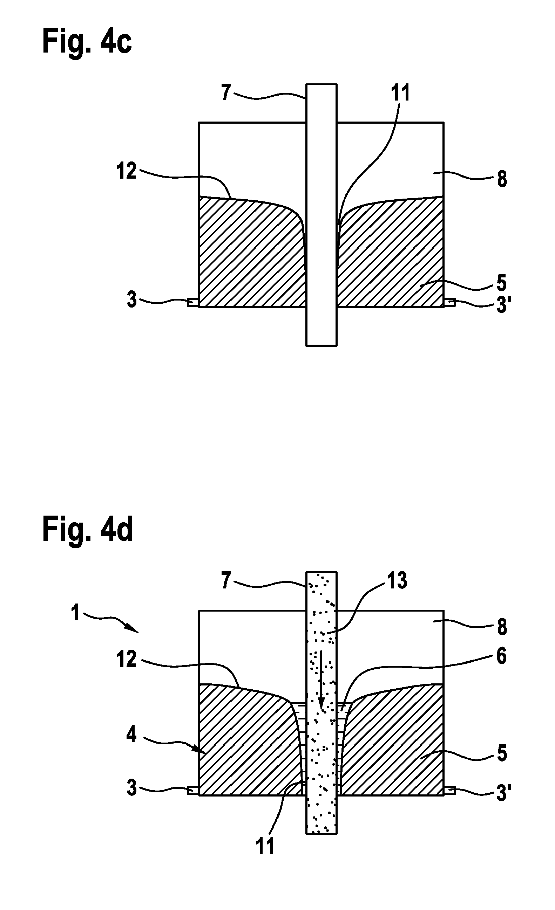

In Figur 4a bis 4d ist ein Latentwärmespeicher schematisiert, bei dem die Bildung eines trichterförmigen Gefälles 12, also eines sich nach unten verjüngenden Abstandes 11 des kristallinen PCMs 5 zur Wärmeübertragungsvorrichtung 7 verdeutlicht. Dieser Abstand 11 dient dazu, dass aufgrund von Erwärmung durch die Wärmeübertragungsvorrichtung 7 schmelzendes PCM 14 mehr Freiraum zur Expansion besitzt. In Figur 4a hat die Kristallisation gerade begonnen, das Kompensationsvolumen 8 hat sich an der Oberseite des Gehäuses 2 gebildet und besitzt eine ebene Unterseite, da diese durch rein flüssiges PCM 6 gebildet ist. In Figur 3b ist die Kristallisation so weit fortgeschritten, dass das flüssige PCM 6 unter die Oberseite des kristallinen PCMs 5 gesunken ist. Hier bildet sich jetzt ein trichterförmiges Gefälle 12, da sich nur noch im mittigen Teil des Gehäuses flüssiges, insbesondere durch Kristallisation an Volumen verlierendes PCM 4 befindet. In Figur 3c ist der Endzustand dieses Prozesses schematisiert. Das PCM 4 ist vollständig kristallisiert und bildet ein trichterförmiges Gefälle 12 um die Wärmeübertragungsvorrichtung. In Figur 3d ist erkennbar, wie der Teil des Kompensationsvolumens 8, der durch den Abstand 11 gebildet wird, beim Schmelzen des PCMs 4 aufgrund von Wärmeübertragung mit einströmenden warmen Motoröl 13 mit flüssigem PCM 6 gefüllt wird.

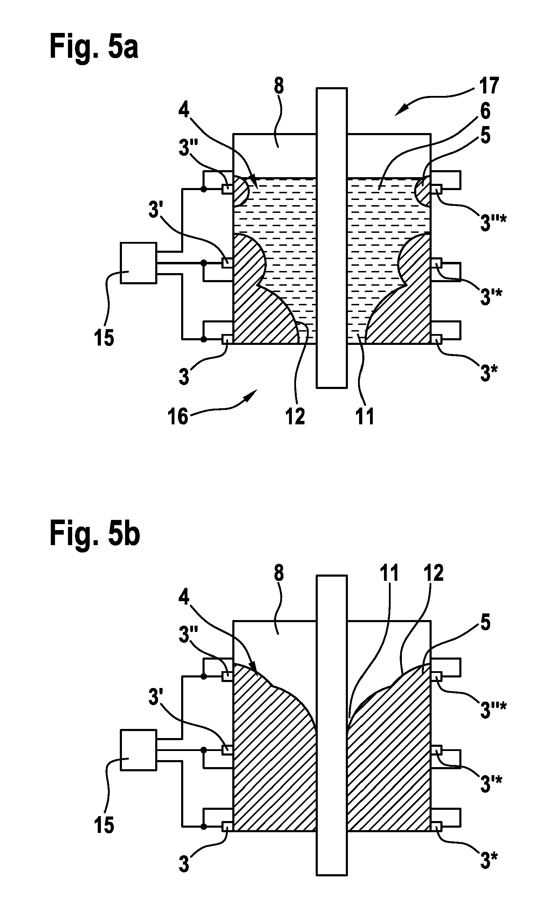

In Figur 5a ist ein Ausführungsbeispiel zu schematisiert, bei dem ein Zeitgeber 15 vorgesehen ist, der seitlich angebrachte Keimbereitstellungseinrichtungen 3, 3', 3', 3'*, 3", 3"* zeitversetzt aktiviert. Dadurch ergibt sich ein im Wesentlichen trichterförmiges Gefälle 12, das in Figur 5b im Endzustand schematisiert ist, mit den beschriebenen Vorteilen.

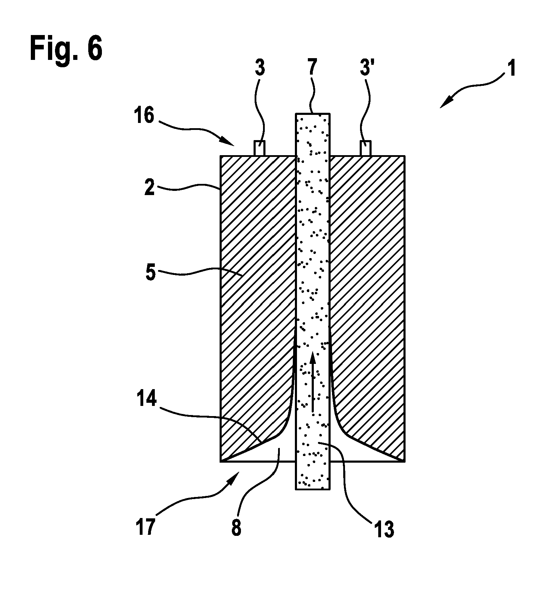

In Figur 6 ist ein Trennelement 14 in Form einer elastischen Membran zwischen der Wärmeübertragungsvorrichtung 7 und dem Gehäuse 2 eingespannt, die auf ihrer oberen Seite an das vollständig kristallisierte PCM 5 und auf der unteren Seite an das evakuierte Kompensationsvolumen 8 angrenzt. Durch die Vorspannung des Trennelements 14 konnte sich, der Vorgang ist nicht dargestellt, ein Kompensationsvolumen 8 unterhalb des flüssigen PCMs 4 bilden, nachdem die Kristallisation durch die im Initialbereich 16 im oberen Bereich des Gehäuses 2 angeordneten Keimbereitstellungseinrichtungen 3, 3' ausgelöst wurde. Wenn nun warmes Motoröl 13 von unten nach oben einströmt, wird zuerst der an das Kompensationsvolumen 8 angrenzende Bereich des kristallinen PCM 5 schmelzen und, von dem Trennelement 14 eingedämmt, dahinein expandieren.

Allen Ausführungsbeispielen ist gemein, dass ein Einschluss von Kompensationsvolumina 8 bei der Kristallisation oder die Bildung von eingeschlossenen Flüssigkeitsgebieten beim Schmelzen von PCM durch geschickte Wahl von Position und / oder zeitlichem Versatz der Aktivierung der mindestens einen Keimbereitstellungseinrichtung 3 ausgeschlossen werden kann.

Die Erfindung ist nicht beschränkt auf die vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, dass als Keimbereitstellungseinrichtung beispielsweise mindestens ein Magnetaktor statt mindestens eines Peltier-Elements eingesetzt wird, dass statt Natriumacetat-Trihydrat ein anderes PCM wie beispielsweise Paraffin eingesetzt wird. Statt Motoröl kann ebenfalls ein anderes Wärmeübertragungsfluid verwendet werden. Statt eines Wärmeübertragungsrohres kann eine andere Wärmeübertragungsvorrichtung wie beispielsweise Wärmeübertragungsplatten oder ein elektrisches Heizelement gewählt werden. Auch kann das Gehäuse eine andere Form, beispielweise eine Quaderform besitzen.

Ergänzend ist darauf hinzuweisen, dass "umfassend" keine anderen Elemente oder Schritte ausschließt und "eine" oder "ein" keine Vielzahl ausschließt. Bezugszeichen in den Ansprüchen sind nicht als Einschränkung anzusehen.

## Patentansprüche

1. Latentwärmespeicher (1) zur temporären Bevorratung von Heizenergie, umfassend:
- ein Gehäuse (2), welches ein PCM (4) als Energiespeichermedium beinhaltet, das durch Wechsel vom im Normalzustand flüssigen zum festen Aggregatzustand thermische Energie abgibt,
- mindestens eine zumindest teilweise im oder am Gehäuse (2) angeordnete und mit dem PCM (4) in Wärmeaustausch stehende Wärmeübertragungsvorrichtung (7) zur Weiterleitung der thermischen Energie,
- mindestens eine am Gehäuse (2) angeordnete Keimbereitstellungseinrichtung (3) zur Erzeugung eines Kristallisationskeims,
**dadurch gekennzeichnet, dass** die mindestens eine Keimbereitstellungseinrichtung (3) in einem der Wärmeübertragungsvorrichtung (7) abgewandten Initialbereich (16) des Gehäuses (2) vorgesehen ist, um einen Phasenwechsel des PCM (4) von der flüssigen in die feste Phase in Form einer Kristallisation auszulösen, wodurch sich in einem vom Initialbereich (16) verschiedenen, an die Wärmeübertragungsvorrichtung (7) grenzenden Kompensationsbereich (17) ein Kompensationsvolumen (8) bildet, welches das PCM (4) während eines Phasenwechsels von der festen in die flüssige Phase durch Schmelzen einnimmt.

2. Latentwärmespeicher nach einem der vorherigen Ansprüche,
**dadurch gekennzeichnet, dass** sich der Initialbereich (16) in einem der Gravitationsrichtung folgenden unteren Teil des Gehäuses (2) befindet, und dass der Kompensationsbereich (17) in einem der Gravitationsrichtung entgegengesetzten oberen Teil des Gehäuses (2) entsteht.

3. Latentwärmespeicher nach Anspruch 1 oder 2,
**dadurch gekennzeichnet, dass** im Gehäuse (2) mindestens ein Isolationselement (9) zum Führen der Kristallisierungsausbreitung von der mindestens einen Keimbereitstellungseinrichtung (3) zum Initialbereich (16) vorgesehen ist.

4. Latentwärmespeicher nach Anspruch 3,
**dadurch gekennzeichnet, dass** zumindest ein Teil des mindestens einen Isolationselements (9) aus einem elastischen Material ausgebildet ist

5. Latentwärmespeicher nach Anspruch 3 oder 4,
**dadurch gekennzeichnet, dass** zumindest ein Teil des mindestens einen Isolationselements (9) aus einem thermisch isolierenden Material ausgebildet ist.

6. Latentwärmespeicher nach einem der vorherigen Ansprüche,
**dadurch gekennzeichnet, dass** die mindestens eine Keimbereitstellungseinrichtung (3) als ein an den Initialbereich (16) angrenzender Aktuator, insbesondere ein Peltier-Element, ausgebildet ist.

7. Latentwärmespeicher nach einem der vorherigen Ansprüche,
**dadurch gekennzeichnet, dass** das Gehäuse (2) zur Erzeugung eines Unterdrucks im Kompensationsvolumen (2) durch die Kristallisation luftdicht und mechanisch starr ausgebildet ist.

8. Latentwärmespeicher nach einem der vorherigen Ansprüche,
**dadurch gekennzeichnet, dass** mindestens zwei beabstandet zueinander am Gehäuse (2) angeordnete Keimbereitstellungseinrichtungen (3, 3') vorgesehen sind, und dass jeder Keimbereitstellungseinrichtung (3, 3') ein Zeitgeber (15) zugeordnet ist, um einen zeitlichen Abstand der Aktivierung der Keimbereitstellungseinrichtungen (3, 3') relativ zueinander festzulegen.

9. Latentwärmespeicher nach einem der vorherigen Ansprüche,
**dadurch gekennzeichnet, dass** im Gehäuse (2) ein Trennelement (14) zur Eindämmung des PCM (4) vorgesehen ist, das einerseits an das PCM (4) und andererseits an das Kompensationsvolumen (8) grenzt.
